# EUROPÄISCHE PATENTSCHRIFT

(11) **EP 0 946 935 B1**
(45) Veröffentlichungstag und Bekanntmachung des Hinweises auf die Patenterteilung: **31.01.2001**
(21) Anmeldenummer: 97941870.4
(22) Anmeldetag: 04.09.1997
(51) Int. Cl.: G09B 29/04

(54) **FALZMUSTER**
FOLD PATTERN
MOTIF DE PLIAGE

(30) Priorität: 05.09.1996 DE 19636069; 05.09.1996 DE 19636070; 05.09.1996 DE 19636071
(43) Veröffentlichungstag der Anmeldung: 06.10.1999
(73) Patentinhaber: Huber, Franz, 80992 München (DE)
(72) Erfinder: Huber, Franz, 80992 München (DE)
(74) Vertreter: Kiessling, Christian
(86) Internationale Anmeldenummer: DE9701949
(87) Internationale Veröffentlichungsnummer: WO9810400

(56) Entgegenhaltungen:
- EP-A- 0 329 861
- EP-A- 0 487 470
- CH-A- 457 933
- DE-B- 1 021 191
- DE-C- 613 532
- DE-C- 832 211
- DE-U- 6 807 085
- DE-U- 8 229 992
- DE-U- 8 707 414
- DE-U- 8 900 414
- FR-A- 479 899
- FR-A- 613 092
- FR-A- 975 762
- GB-A- 2 082 503
- GB-A- 2 119 147
- US-A- 2 190 438
- US-A- 4 906 024

## Beschreibung

Die Erfindung betrifft eine Karte mit einem Muster von Falzlinien, entlang derer die Karte faltbar ist, wobei mindestens zwei über eine gemeinsame Mittelfläche verbundene Abschnitte mit jeweils einer Mehrzahl von parallelen Falzlinien in einer Richtung parallel zu zwei parallelen Begrenzungslinien der Mittelfläche angeordnet sind, wobei die Abschnitte an sukzessiven Linien alternierend in jeweils entgegengesetzte Richtungen so faltbar sind, daß eine Mehrzahl von Laschen gebildet ist, wobei die Länge der Laschen mit jeder Lasche mit der Entfernung von der Mittelfläche um einen konstanten vorgegebenen Betrag abnimmt, und wobei die Mittelfläche entlang einer Mittelfalzlinie faltbar ist.

Bei Karten der eingangs genannten Art dient ein Muster von Falzlinien dazu, die Karte auf ein möglichst handliches Format zusammenlegen zu können. Nachteilig ist dabei, daß es zum Auffinden eines bestimmten Punktes oder eines bestimmten Bereiches auf der Karte notwendig ist, die Karte insgesamt zu entfalten, um einen Überblick über das gesamte, von der Karte dargestellte Gebiet zu erhalten.

Aus DE 89 00 414 U ist eine Karte mit einem Falzmuster der eingangs genannten Art bekannt. Eine solche Karte weist jedoch den Nachteil auf, daß sie beispielsweise in einem Regal nicht gut erkennbar unterbringbar ist.

Aufgabe der Erfindung ist es, eine Karte in Buchform zu schaffen, mit einem Buchrücken, auf dem ein Name aufdruckbar ist.

Für eine Karte der eingangs genannten Art wird diese Aufgabe dadurch gelöst, daß die Mittelfalzlinien der Mittelfläche als mit zwei parallelen Falzlinien versehener Steg ausgebildet ist.

Bevorzugte Ausgestaltungen der Erfindung sind Gegenstand der Unteransprüche.

Bei der erfindungsgemäßen Karte kann die Breite der Laschen in äquidistanten Abschnitten angeordnet sein oder mit zunehmender Entfernung von der Mittelfläche zunehmen oder abnehmen oder zunehmen und abnehmen. Bei letzterer Ausführungsform ist es dabei vorteilhaft, wenn die nahe der Mittellinie der Mittelfläche zu liegen kommenden Laschenkanten übereinanderliegen und die nahe den Seitenrändern der Mittelfläche zu liegen kommenden Laschenkanten sukzessiv seitlich versetzt werden. Alternativ kann die Karte so ausgebildet sein, daß die nahe der Mittellinie der Mittelfläche zu liegen kommenden Laschenkanten sukzessiv um einen konstanten Betrag seitlich versetzt sind und die nahe den Seitenrändern der Mittelfläche zu liegen kommenden Laschenkanten übereinanderliegen.

Weiterhin ist es möglich, die Karte so auszubilden, daß die nahe der Mittellinie der Mittelfläche zu liegen kommenden Laschenkanten sukzessiv um einen konstanten Betrag seitlich versetzt sind und auch die nahe den Seitenrändern der Mittelfläche zu liegen kommenden Laschenkanten seitlich um einen konstanten Betrag versetzt sind, vorzugsweise um den gleichen konstanten Betrag. Gemeinsam ist diesen Ausführungsformen der Vorteil, daß durch das jeweilige seitliche Versetzen der Laschenkanten ein Bereich einer benachbarten Lasche sichtbar wird, der farblich markiert werden kann oder in Form von Zahlen, Symbolen oder Buchstaben gekennzeichnet werden kann. Durch die Reihenfolge dieser Zahlen und Buchstaben oder durch eine mögliche Farbwahl entsprechend dem Regenbogen ist es so möglich, die auf den Laschen dargestellten Karteninhalte in Bezug zu bringen zu der relativen Lage des in der Laschenfläche dargestellten geographischen Gebietes zu dem gesamten von der Karte abgebildeten geographischen Gebietes.

Gemäß bevorzugter Ausgestaltungen der erfindungsgemäßen Karte kann vorgesehen sein, daß die nahe der Mittellinie der Mittelfläche zu liegen kommenden Laschenkanten übereinanderliegen und die nahe den Seitenrändern der Mittelfläche zu liegen kommenden Laschenkanten in zwei unterschiedlichen Abständen von der Mittellinie zu liegen kommen, so daß zwei Klassen von Laschen unterschiedlicher Breite geschaffen werden. Dies kann für besondere Anwendungen der Karte oder Darstellungen auf der Karte vorteilhaft sein.

Ebenfalls vorteilhaft ist es, wenn die Laschen mit Hinweislinien versehen sind, die senkrecht von der Längsachse der Mittelfläche ausgehen und Verbindungen darstellen zwischen informativen Hinweisen auf der Mittelfläche und entsprechenden Bezugsbereichen auf den Flächen der Laschen. Dadurch wird eine Zuordnung von auf der Mittelfläche gegebener Information zu entsprechenden Bereichen auf den Flächen der Laschen hergestellt, an denen diese Information dargestellt ist oder weiter ausgeführt ist.

Bei der erfindungsgemäßen Karte ist es möglich und vorteilhaft, eine Mehrzahl von Mittelflächen übereinander bzw. untereinander anzuordnen, um dadurch den Bereich der gesamten, von der Karte dargestellten geographischen Fläche zu vergrößern. Das Besondere bei dieser Ausführungsform ist die weiter oben erwähnte Markierung von Laschen mit Hilfe von Zahlen, Symbolen oder Buchstaben oder entsprechend den Farben des Regenbogens von Vorteil, um solche Kartenlaschen zweier aneinander angrenzender Mittelflächen besonders einfach und schnell zu finden, die aneinander angrenzende geographische Bereiche der Karte zeigen.

Durch eine Übereinanderanordnung von zwei oder mehr Mittelflächen übereinander ergibt sich bei Ausbilden einer weiteren entsprechenden Falzlinie als Doppelfalzlinie (zwei parallele Falzlinien im Abstand von wenigen Millimetern voneinander) beim Zusammenklappen eine vorteilhafte 'Buchform' mit einem Buchrücken im Bereich der Doppelfalzlinie, auf dem ein Name aufgedruckt werden kann. Die Karte kann so wie ein Buch leicht auffindbar in einem Buchregal abgestellt werden. Der Titel der Karte kann dabei integriert sein und ergibt sich dann durch das Zusammenfalten automatisch und braucht nicht wie üblich gesondert zusätzlich gedruckt werden.

Bei einer Übereinanderanordnung von zwei oder mehr Mittelflächen übereinander werden bei den entsprechenden übereinander angeordneten Abschnitten die Berührungslinien der Abschnitte so geschlitzt, daß ein Umblättern der einzelnen Laschen auch in zusammengelegtem Zustand der zwei oder mehr Abschnitte möglich ist. Dabei werden die jeweils vorletzten seitlichen Laschen oder eine der vorherigen Laschen jeder Abschnittsseite nicht geschlitzt, um ein Auseinanderfallen der Abschnitte zu vermeiden. Dabei werden entweder eine beliebig plazierte Mittelfläche oder zwei oder mehr verbundene Mittelflächen oder die jeweils vorletzten seitlichen Laschen oder eine der vorherigen Laschen jeder Abschnittsseite nicht geschlitzt, um ein Auseinanderfallen der Abschnitte zu vermeiden.

Im folgenden wird das erfindungsgemäße Falzmuster anhand einer bevorzugten Ausführungsform erläutert, die in den Figuren der Zeichnung dargestellt ist. Darin zeigen:
- Fig.1A: eine bevorzugte Ausführungsform einer Karte mit dem erfindungsgemäßen Falzmuster in einer Ansicht von oben;
- Fig.1B: die in Fig. 1A dargestellte Karte in einer Seitenansicht;
- Fig.2A: eine andere bevorzugte Ausführungsform einer Karte mit dem erfindungsgemäßen Falzmuster in einer Ansicht von oben;
- Fig.2B: die in Fig. 2A dargestellte Karte in einer Seitenansicht;
- Fig.3A: eine weitere bevorzugte Ausführungsform einer Karte mit dem erfindungsgemäßen Falzmuster in einer Ansicht von oben;
- Fig.3B: die in Fig. 3A dargestellte Karte in einer Seitenansicht;
- Fig.4A: eine weitere bevorzugte Ausführungsform einer Karte mit dem erfindungsgemäßen Falzmuster in einer Ansicht von oben;
- Fig.4B: die in Fig. 4A dargestellte Karte in einer Seitenansicht;
- Fig.5A: eine weitere bevorzugte Ausführungsform einer Karte mit dem erfindungsgemäßen Falzmuster in einer Ansicht von oben;
- Fig.5B: die in Fig. 5A dargestellte Karte in einer Seitenansicht.
- Fig. 6: eine Karte, die entsprechend dem erfindungsgemäßen Muster von Falzlinien gefaltet worden ist, im Querschnitt.

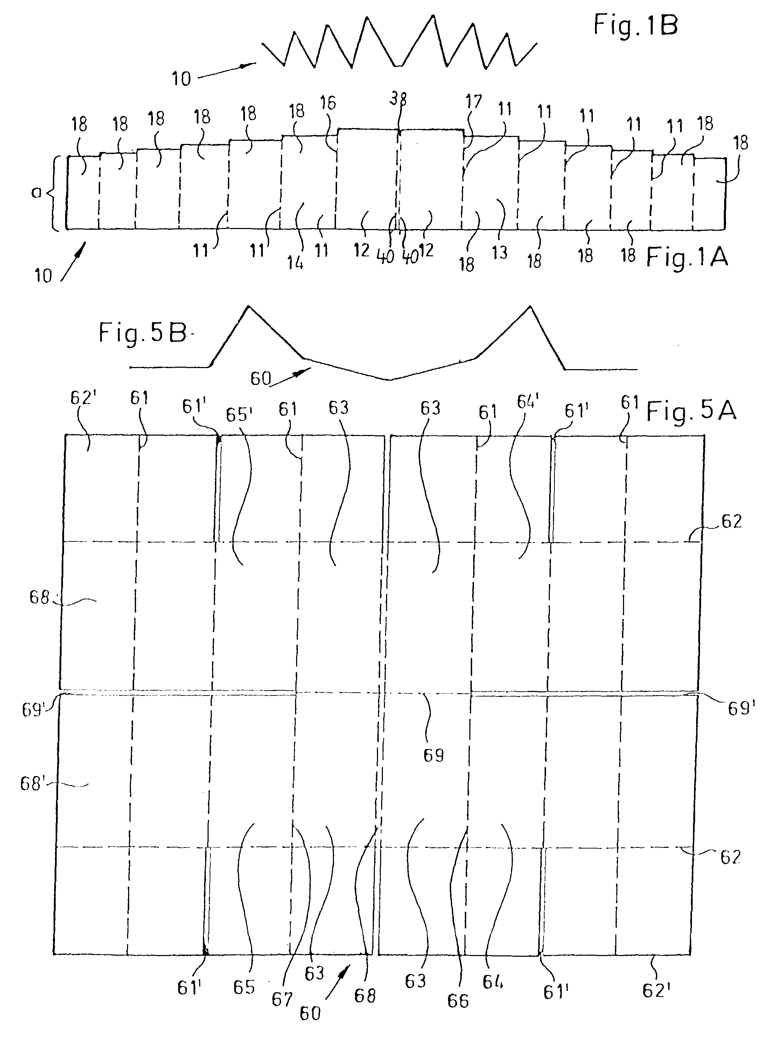

Die in den Figuren 1A und 1B dargestellte Karte weist ein Muster von Falzlinien 11 auf, entlang derer die Karte faltbar ist, wobei zwei über eine gemeinsame Mittelfläche 12 verbundene Abschnitte 13, 14 mit jeweils einer Mehrzahl paralleler Falzlinien 11 in Richtung parallel zu zwei parallelen Begrenzungslinien 16, 17 der Mittelfläche 12 angeordnet sind, wobei die Abschnitte an sukzessiven Linien 11 alternierend in jeweils entgegengesetzte Richtungen so falzbar sind, daß eine Mehrzahl von Laschen gebildet ist, wobei die Länge a der Laschen mit der Entfernung von der Mittelfläche um jeweils einen konstanten vorgegebenen Betrag abnimmt.

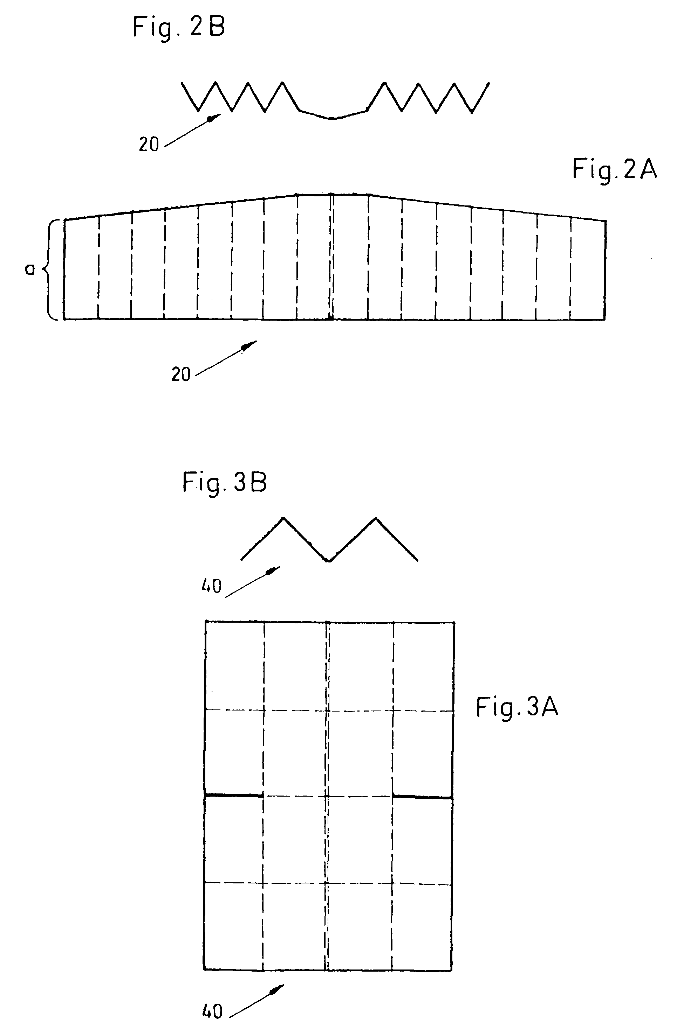

Die in den Figuren 2A und 2B dargestellte Karte ist im wesentlichen mit der in den Figuren 1A und 1B dargestellten Karte identisch, wobei die Bezugszeichen jeweils um die Zahl 10 erhöht sind. Im Unterschied zu der in den Figuren 1A und 1B dargestellten Karte nimmt bei dieser Karte die Länge a der Laschen mit der Entfernung von der Mittelfläche linear ab.

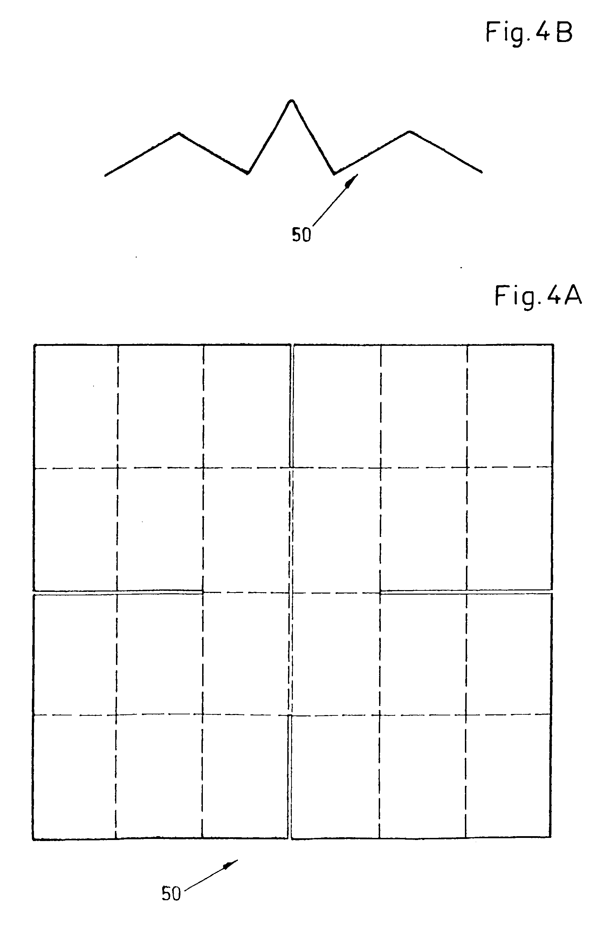

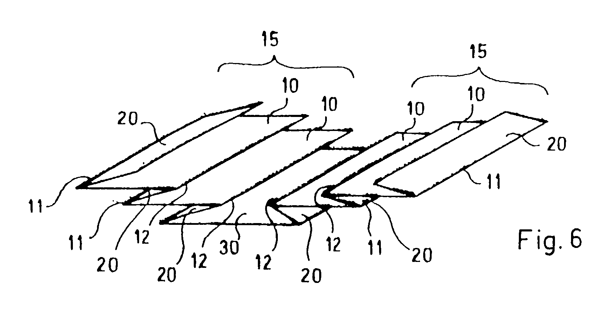

Die Figuren 3A, 3B bis 5A, 5B zeigen alternative Ausführungsformen der erfindungsgemäßen Karte.

Die in den Figuren 5A und 5B dargestellte Karte weist dabei ein Muster von Falzlinien auf, entlang derer die Karte 60 faltbar ist, wobei zwei über eine gemeinsame Mittelfläche 63 verbundene Abschnitte 64, 64' und 65, 65' mit jeweils einer Mehrzahl von parallelen Falzlinien 61 in einer Richtung parallel zu zwei ersten parallelen Begrenzungslinien 66, 67 der Mittelfläche 63 angeordnet sind, wobei die Karte 60 an sukzessiven Linien 61 alternierend in jeweils entgegengesetzte Richtungen so faltbar ist, daß eine Mehrzahl von Laschen bildbar ist, wobei die Mittelfläche 63 entlang zweier senkrecht aufeinander stehender Mittelfalzlinien 68, 69 faltbar ist und die Laschen jeweils mindestens eine Falzlinie 61 aufweisen, die parallel zu einer 68 der Mittellinien 68, 69 der Mittelfläche 63 verlaufen und jeweils mit einem Schlitz 69' versehen sind, der parallel zu der anderen 69 der Mittellinien 68, 69 der Mittelfläche 63 verläuft. Die Mittellinie 68 dieser karte ist als Steg ausgebildet, wie dies in der Figur durch eine doppelte Strichführung angedeutet ist. Des weiteren ist die in Fig. 5A dargestellte Karte im Bereich der Abschnitte, die bezüglich der Mittellinie 69 außen liegen, abschnittsweise mit Schlitzen 61' versehen, die eine bessere Faltbarkeit dieser Karte bewirken. Der Abstand der parallelen Falzlinien 62 ist bei dieser Karte so bemessen, daß ihr Abstand zum Rand 62' der Karte 60 abnimmt.

Die in Fig. 6 dargestellte Karte weist eine Mehrzahl erster äquidistanter paralleler Falzlinienpaare 11, 12 auf, zwischen denen eine Mehrzahl von Flächen 10 ausgebildet ist. Zwischen dieser Mehrzahl von Flächen 10 sind Flächen 20 ausgebildet, die von jeweils zweiten äquidistanten parallelen Falzlinienpaaren 12, 11 begrenzt sind. Der Abstand eines Linienpaares 12, 11 der Flächen 20 ist halb so groß wie der Abstand eines Linienpaares 11, 12 der Begrenzungslinien der Flächen 10. Die Flächen 20 bilden klappbare Laschen, wobei auf der Innenseite dieser Laschen Zusatzinformation zu den geographischen Gebieten, die auf dem benachbarten Flächen 20 dargestellt sind, gegeben ist. Eine gemeinsame Mittelfläche 30 verbindet zwei Abschnitte 15 von Flächen 10 und Flächen 20.

## Patentansprüche

1. Karte mit einem Muster von Falzlinien (11), entlang derer die Karte (100) faltbar ist, wobei mindestens zwei über eine gemeinsame Mittelfläche (12) verbundene Abschnitte (13,14 mit jeweils einer Mehrzahl von parallelen Falzlinien (11) in einer Richtung parallel zu zwei parallelen Begrenzungslinien (16, 17) der Mittelfläche (12) angeordnet sind, wobei die Abschnitte an sukzessiven Linien alternierend in jeweils entgegengesetzte Richtungen so faltbar sind, dass eine Mehrzahl von Laschen (18) gebildet ist, wobei die Länge der Laschen (18) mit jeder Lasche mit der Entfernung von der Mittelfläche (12) um einen konstanten vorgegebenen Betrag abnimmt, und wobei die Mittelfläche (12) entlang einer Mittelfalzlinie (38) faltbar ist, dadurch **gekennzeichnet,** dass die Mittelfalzlinien (38) der Mittelfläche (12) als mit zwei parallelen Falzlinien (40) versehener Steg ausgebildet ist.

2. Karte nach Anspruch 1, dadurch gekennzeichnet, dass die Länge der Laschen (11) mit der Entfernung von der Mittelfläche (12) linear abnimmt.

3. Karte nach Anspruch 1, dadurch gekennzeichnet, dass die Länge der Laschen (11) mit jeder Lasche (11) mit der Entfernung von der Mittelfläche (12) um einen konstanten vorgegebenen Betrag abnimmt.

## Claims

1. A map with a pattern of folding lines (11) along which the map (100) can be folded, at least two portions (13, 14) connected via a common center area (12) and each having a plurality of parallel folding lines (11) being disposed in a direction parallel to two parallel limiting lines (16, 17) of the center area (12), the portions being foldable on successive lines alternatingly in opposite directions so as to form a plurality of flaps (18), the length of the flaps (18) decreasing by a constant given amount with each flap with the distance from the center area (12), and the center area (12) being foldable along a center folding line (38), characterized in that the center folding lines (38) of the center area (12) are formed as a strip provided with two parallel folding lines (40).

2. A map according to claim 1, characterized in that the length of the flaps (11) decreases linearly with the distance from the center area (12).

3. A map according to claim 1, characterized in that the length of the flaps (11) decreases with each flap (11) by a constant given amount with the distance from the center area (12).

## Revendications

1. Carte présentant un motif de lignes de pliage (11), le long desquelles la carte (100) peut être pliée, au moins deux portions (13, 14), liées par une surface centrale commune (12) et présentant chacune une pluralité de lignes de pliage parallèles (11), étant disposées dans un sens parallel par rapport à deux lignes de limitation (16, 17) de la surface centrale (12), ces portions pouvant être pliés le long de lignes successives en sens alternant, de façon à former une pluralité de segments (18), la longueur des segments (18) diminuant de segment à segment d'une ètendue constante prédéterminée, en s'éloignant de la surface centrale (12), et la surface centrale (12) pouvant être pliée le long d'une ligne de pliage médiane (38),
**caractérisée en ce que** les lignes de pliage médianes (38) de la surface centrale (12) sont réalisées sous forme d'un dos muni de deux lignes de pliage (40) parallèles.

2. Carte selon la revendication 1, **caractérisée en ce que** la longueur des segments (11) diminue de façon linéaire en s'éloignant de la surface centrale (12).

3. Carte selon la revendication 1, **caractérisée en ce que** la longueur des segments (11) diminue pour chaque segment (11) d'une ètendue constante prédéterminée, en s'éloignant de la surface centrale (12).
